# EUROPEAN PATENT SPECIFICATION

(11) **EP 4 366 064 B1**
(45) Date of publication and mention of the grant of the patent: **04.03.2026**
(21) Application number: 23737360.0
(22) Date of filing: 04.01.2023
(51) Int. Cl.: H01M 50/342, H01M 10/6551, H01M 10/6552, H01M 10/613, H01M 10/6556

(54) **BATTERY MODULE AND MANUFACTURING METHOD THEREOF**
BATTERIEMODUL UND HERSTELLUNGSVERFAHREN DAFÜR
MODULE DE BATTERIE ET SON PROCÉDÉ DE FABRICATION

(30) Priority: 04.01.2022 KR 20220000843
(43) Date of publication of application: 08.05.2024
(73) Proprietor: LG Energy Solution, Ltd., Seoul 07335 (KR)
(72) Inventor: JUNG, Min Yong, Daejeon 34122 (KR); CHOI, Bum, Daejeon 34122 (KR); KEUM, Jong Yoon, Daejeon 34122 (KR); AHN, Soo Jun, Daejeon 34122 (KR); CHUNG, Jae Heon, Daejeon 34122 (KR)
(74) Representative: Plasseraud IP
(86) International application number: PCT/KR2023/000122
(87) International publication number: WO 2023/132612

(56) References cited:
- WO-A1-2021/206514
- JP-A- 2019 212 481
- KR-A- 20110 042 119
- KR-A- 20130 004 141
- KR-A- 20190 047 513
- KR-B1- 101 750 479
- US-A1- 2009 220 850
- US-A1- 2019 229 384
- US-B2- 9 070 958

## Description

### Technical Field

The present invention relates to a battery module and a manufacturing method thereof, which relates to, specifically, a battery module capable of suppressing a flame of an ignited battery cell by a method that while a heat dissipation film is torn by a pressure to open a vent part of the battery cell upon internal ignition of the battery cell, cooling water flows down to the battery cell through the damaged portion of the heat dissipation film, and a manufacturing method thereof.

### Background Art

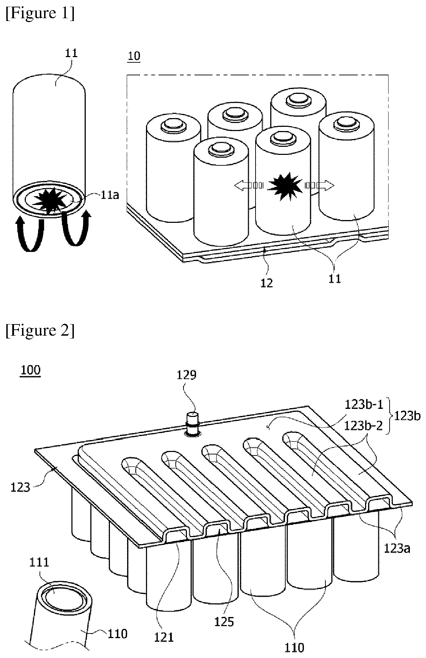

Figure 1 is a diagram for explaining, in a battery module according to the conventional technology, lateral ignition upon ignition of a battery cell.

In general, the battery module (10) comprises at least one battery cell (11) and a heatsink (12) attached to the battery cell (11). The heatsink (12) may be formed by attaching aluminum plates to each other by a brazing method or by attaching an aluminum plate to a plastic plate by a heterojunction method.

The battery cell (11) is provided with a vent part (11a). When the internal pressure of the battery cell increases, the vent part (11a) is designed to open prior to other parts of the battery cell (11). When ignition occurs inside the battery cell, the vent part (11a) is opened, and flames are ejected to the outside of the battery cell (11).

Referring to Figure 1, as in the prior art, when the heatsink (12) is attached to the vent part (11a) side of the battery cell (11), the heatsink (12) blocks the vent part (11a) of the battery cell (11) upon ignition occurrence inside the battery cell (11), so that the vent part (11a) does not open upon the ignition of the battery cell (11).

If the vent part (11a) of the battery cell (11) is not opened, the internal pressure of the battery cell (11) is continuously increased to tear the side surface of the battery cell, whereby a phenomenon in which flames are ejected to the side surface of the battery cell occurs.

The flames ejected to the side surface of the battery cell (11) are transmitted to the battery cell (11) disposed adjacent thereto, thereby causing chain ignition.

US 2009/220850 A1, US 2019/229384 A1, and US 9070958 B2, describe battery modules.

### Disclosure

### Technical Problem

The present invention is intended to provide a battery module capable of suppressing a flame of an ignited battery cell by a method that while a heat dissipation film is torn by a pressure to open a vent part of the battery cell upon internal ignition of the battery cell, cooling water flows down to the battery cell through the damaged portion of the heat dissipation film, and a manufacturing method thereof.

In addition, the present invention is intended to provide a battery module capable of preventing continuous ignition of battery cells, and a method for manufacturing the battery module.

### Technical Solution

A battery module according to one example of the present invention comprises at least one battery cell having a vent part, and a heat dissipation part, which is disposed to face the vent part of the at least one battery cell, for dissipating heat from the battery cell.

Also, the heat dissipation part comprises a heat dissipation film, one side of which is attached to the battery cell to face the vent part of the battery cell, and a heat dissipation case, which is coupled to the other side opposite to one side of the heat dissipation film, having a cooling flow passage through which cooling water flows.

In addition, the heat dissipation film is provided to be damaged when the vent part of the battery cell is ignited.

Furthermore, the heat dissipation part is provided so that the cooling water flowing through the cooling flow passage passes through the damaged portion of the heat dissipation film to flow to the vent part of the battery cell.

Also, the heat dissipation film may be a film in which a polymer resin film is compressed to an aluminum film.

In addition, the heat dissipation film may comprise a polypropylene (PP) film, an aluminum film, a nylon film, and a polyethylene terephthalate (PET) film. In this case, a polypropylene (PP) film, an aluminum film, a nylon film, and a polyethylene terephthalate (PET) film may be sequentially laminated to form a heat dissipation film.

Furthermore, the heat dissipation case has a film coupling part coupled to the heat dissipation film, and at least one flow passage groove provided stepwise with respect to the film coupling part. In this case, the heat dissipation film surrounds the at least one flow passage groove, and the cooling flow passage is provided in a space between the at least one flow passage groove and the heat dissipation film.

Also, the at least one flow passage groove may comprise a reference groove, and a plurality of branch grooves branched from the reference groove.

In addition, the heat dissipation part may comprise a port connected to the flow passage groove to enable fluid migration and provided in the heat dissipation case, and a cooling unit connected to the port and provided to supply or recover cooling water through the port.

Furthermore, the heat dissipation case may be formed of a synthetic resin.

Also, the synthetic resin may comprise a polypropylene (PP)-based resin.

In addition, according to another aspect of the present invention, as a method for manufacturing the battery module, a method for manufacturing the battery module comprising steps of molding a heat dissipation case having a cooling flow passage by a vacuum injection method, and thermally compressing a heat dissipation film to the heat dissipation case is provided.

Furthermore, the manufacturing method of the battery module may comprise a step of coupling a heat dissipation film to the battery cell such that a partial region of the vent part of the battery cell is located on the cooling flow passage.

Also, the heat dissipation film may be formed by sequentially laminating a polypropylene (PP) film, an aluminum film, a nylon film, and a polyethylene terephthalate (PET) film.

In addition, the heat dissipation case may comprise a polypropylene (PP)-based resin.

### Advantageous Effects

As described above, the battery module related to at least one example of the present invention, and a manufacturing method thereof have the following effects.

It is possible to early suppress a flame of an ignited battery cell by a method that while a heat dissipation film is torn by a pressure to open a vent part of the battery cell upon internal ignition of the battery cell, cooling water flows down to the battery cell through the damaged portion of the heat dissipation film.

Also, it is possible to secure safety of the battery module by suppressing an increase in temperature of the ignited battery cell and the battery cells adjacent thereto.

In addition, as the heat dissipation film is formed in the form of a thin film by the micrometer, the heat dissipation film can be torn by the force of opening the vent part upon internal ignition of the battery cell. As a result, lateral explosion of the battery cell can be prevented, and thus, chain ignition of the battery cell can be prevented.

### Description of Drawings

Figure 1 is a diagram for explaining, in a battery module according to the conventional technology, lateral ignition upon ignition of a battery cell.
Figure 2 schematically illustrates a perspective diagram of a battery module according to one example of the present invention.
Figure 3 schematically illustrates a cross-sectional diagram of a battery module according to one example of the present invention.
Figure 4 schematically illustrates a combined cross-section of a heat dissipation case and a heat dissipation film according to one example of the present invention.
Figure 5 schematically illustrates a cross section of a heat dissipation film according to one example of the present invention.
Figure 6 schematically illustrates a combined cross-section of a heat dissipation part and a battery cell according to one example of the present invention.
Figure 7 is a diagram for explaining, in a battery module according to one example of the present invention, a process of suppressing a flame of a battery cell while cooling water is discharged from a heat dissipation part upon internal ignition of any one battery cell.

### Mode for Invention

Hereinafter, a battery module according to one example of the present invention, and a method for manufacturing the battery module will be described with reference to the accompanying drawings.

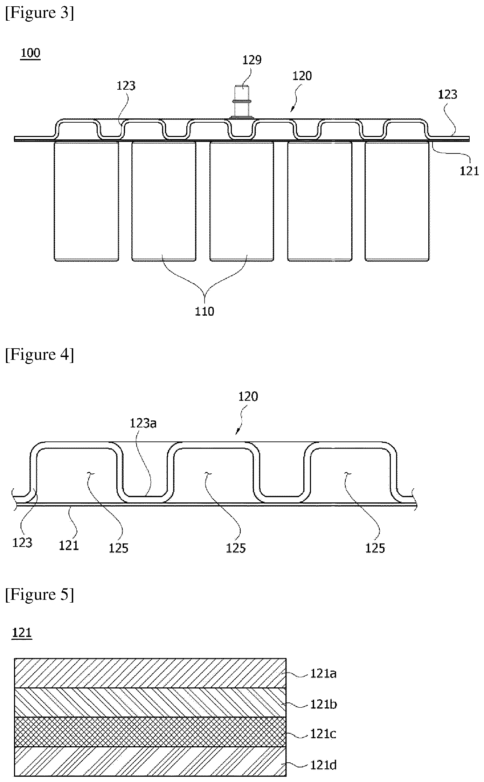

Figure 2 schematically illustrates a perspective diagram of a battery module according to one example of the present invention, Figure 3 schematically illustrates a cross-sectional diagram of a battery module according to one example of the present invention, and Figure 4 schematically illustrates a combined cross-section of a heat dissipation case and a heat dissipation film according to one example of the present invention.

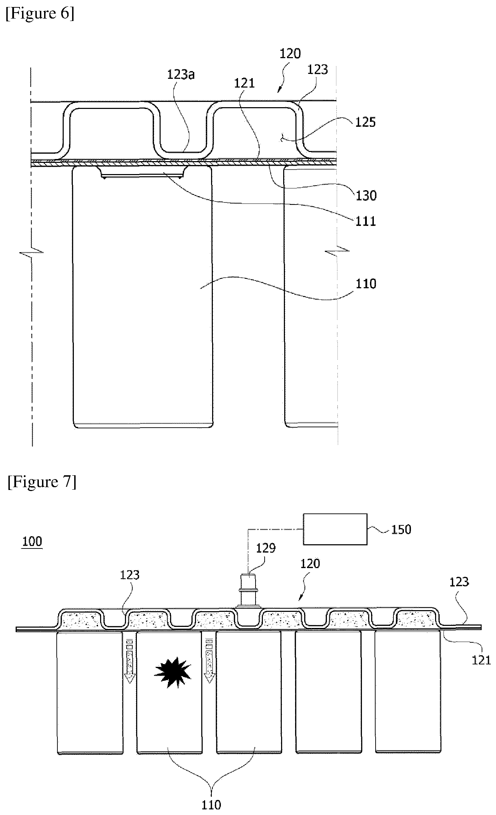

Figure 5 schematically illustrates a cross section of a heat dissipation film according to one example of the present invention, Figure 6 schematically illustrates a combined cross-section of a heat dissipation part and a battery cell according to one example of the present invention, and Figure 7 is a diagram for explaining, in a battery module according to one example of the present invention, a process of suppressing a flame of a battery cell while cooling water is discharged from a heat dissipation part upon internal ignition of any one battery cell.

The battery module (100) according to one example of the present invention comprises at least one battery cell (110) and a heat dissipation part (120). The battery module (100) may comprise a plurality of battery cells (110).

Each battery cell (110) has a vent part (111). For example, the battery cell (110) may be a cylindrical battery cell (110), and may be embedded in a form that an electrode and a separator are wound therein. The vent part (111) is provided at one end of the battery cell (110). Since the battery cell (110) is a known product, a detailed description thereof will be omitted in this example.

In addition, the heat dissipation part (120) is disposed to face the vent parts (111) of the plurality of battery cells (110), and is provided to dissipate heat from the plurality of battery cells (110).

The heat dissipation part (120) comprises a heat dissipation film (121), one side of which is attached to the battery cell (110) to face the vent part (111) of the battery cell (110), and a heat dissipation case (123) coupled to the other side opposite to one side of the heat dissipation film (121) and having a cooling flow passage (125) through which cooling water flows.

As shown in Figures 3 and 4, the heat dissipation part (120) may comprise a heat dissipation film (121), a heat dissipation case (123), a port (129), and a cooling unit (150). The heat dissipation part (120) is disposed to face the vent part of at least one battery cell (110), and dissipates heat generated upon charging of the battery cell (110) through cooling water.

Also, the heat dissipation film (121) may be a film having insulation and heat dissipation properties. The heat dissipation film (121) may be a thin film having a thickness in a micrometer (µm) unit, and for example, the heat dissipation film (121) has a thickness of 10 µm to 900 µm.

In addition, the heat dissipation film (121) may be provided so that it is damaged when the vent part (111) of the battery cell (110) is ignited. At this time, the heat dissipation film (121) may be provided so that a local region directly facing the vent part (111) is partially damaged.

The heat dissipation part (120) may be provided so that the cooling water flowing through the cooling flow passage (125) passes through the damaged portion of the heat dissipation film (121) to flow to the vent part (111a) of the battery cell (110).

Also, the heat dissipation film (121) may be a film in which a polymer resin film is compressed on an aluminum film. Referring to Figure 5, the heat dissipation film (121) may be a film in which a polypropylene (PP) film (121a), an aluminum film (121b), a nylon film (121c), and polyethylene terephthalate (PET) are sequentially laminated and compressed.

In addition, the heat dissipation case (123) may have a film coupling part (123a) coupled to the heat dissipation film (121), and at least one flow passage groove (123b) provided stepwise with respect to the film coupling part (123a). The heat dissipation case (123) surrounds at least one flow passage groove (123b) while the heat dissipation film (121) is thermally compressed to the film coupling part (123a), where the cooling flow passage (125) may be provided between the at least one flow passage groove (123b) and the heat dissipation film. That is, the flow passage groove (123b) is formed stepwise on the film coupling part (123a) and has a structure open toward the film coupling part (123a). At this time, the heat dissipation film (121) is coupled to the film coupling part (123a) to surround the open portion of the flow passage groove (123b), and forms the cooling flow passage together with the flow passage groove (123b).

At least one flow passage groove (123b) comprises a reference groove (123b-1), and at least one branch groove (123b-2) branched from the reference groove (123b-1). The heat dissipation part (120) may comprise a port (129) connected to the flow passage groove (123b) to enable fluid migration and provided in the heat dissipation case, and a cooling unit (150) connected to the port (127) and provided to supply or recover cooling water through the port. In addition, the port (129) may be installed in the reference groove (123b-1).

Here, each branch groove (123b-2) is connected to the reference groove (123b-1), and each branch groove (123b-2) may be provided to be partitioned from each other. At least one branch groove (123b-2) may be provided in parallel with the arrangement direction of the plurality of battery cells (110).

The heat dissipation case (123) may be formed of a synthetic resin. In addition, the heat dissipation case (123) may be injection-molded with a synthetic resin by a vacuum injection method. Here, the synthetic resin may comprise a polypropylene (PP)-based resin.

In this example, the heat dissipation case (123) and the heat dissipation film (121) are formed of a resin material. At this time, when the contact site between the heat dissipation case (123) and the heat dissipation film (121) is thermally compressed or thermally fused, the heat dissipation film (121) is coupled to the film bonding part (123a) of the heat dissipation case (123).

The port (129) is installed in the heat dissipation case (123). The port (129) is installed in the heat dissipation case (123) to enable fluid migration with the reference groove (123b-1). The port (129) is a passage through which cooling water flows into the cooling flow passage (125).

The port (129) may be coupled to the heat dissipation case (123) by any one of an adhesive, a heterojunction method, or a bolting method. A sealing treatment by a sealing member may be performed between the port (129) and the heat dissipation case (123).

The cooling unit (150) is connected to the port (129). The cooling unit is a device which supplies cooling water to the cooling flow passage or recovers cooling water in the cooling flow passage to the outside.

Referring to Figures 6 and 7, the heat dissipation part (120) is coupled to at least one battery cell (110) such that at least a partial region of the vent part (111) of the battery cell (110) is placed on the cooling flow passage (125). At this time, the heat dissipation part (120) may be coupled to the battery cell (110) by the adhesive (130).

In addition, the battery cell (110) may be attached to the heat dissipation part (120) such that an area placed on the film coupling part (123a) is minimized and an area facing the cooling flow passage (125) is maximized. This is to allow the vent part (111) of the battery cell (110) to be opened more easily upon internal ignition of the battery cell (110).

Referring to Figure 7, while the vent part (111) of the battery cell (110) is opened upon internal ignition of the battery cell (110) and the heat dissipation film (121) is torn by the force that the vent part (111) pushes up the heat dissipation film (121), the cooling water flowing through the cooling flow passage (125) flows down to the ignited battery cell (110).

Accordingly, the present invention can suppress the flame of the ignited battery cell (110) early, suppress the temperature increase of the ignited battery cell (110) and the battery cells (110) adjacent thereto, and secure the safety of the battery module (100).

A method for manufacturing the battery module according to one example of the present invention will be described.

The manufacturing method of the battery module comprises steps of forming a heat dissipation case having a cooling flow passage by a vacuum injection method, and thermally compressing a heat dissipation film to the heat dissipation case.

In addition, the manufacturing method comprises a step of coupling a heat dissipation film to the battery cell so that a partial region of the vent part of the battery cell is located on the cooling flow passage.

Specifically, a heat dissipation case (123) provided with at least one flow path groove (123b) is prepared (S1). The heat dissipation case (123) is prepared by the following process.

A mold (not shown) having a shape corresponding to the heat dissipation case (123) is prepared (S1-1). The mold preferably has a structure in which at least one flow passage groove (123b) implements the structure of the heat dissipation case (123) stepwise with respect to the film coupling part (123a).

A synthetic resin is introduced into the mold (S1-2). Here, the synthetic resin is preferably a polypropylene (PP)-based resin.

The synthetic resin is introduced into the mold, and then the mold is heated. Accordingly, the synthetic resin in the mold is softened (S1-3).

Thereafter, the synthetic resin is softened, and then the air in the mold is suctioned by a vacuum injection method. Through this process, in the mold, the softened synthetic resin is molded as in the shape of the mold, and manufactured into a heat dissipation case (S1-4).

Thereafter, the heat dissipation case is separated from the mold (S1-5).

Finally, an opening for a port is punched in the heat dissipation case (S1-6). Here, the opening for the port is an opening in which the port is installed.

Next, when the heat dissipation case (123) is prepared, a heat dissipation film (121) is coupled to the heat dissipation case (123) (S2, S3).

Here, the heat dissipation film (121) is a thin film having a thickness in a micrometer (µm) unit. As the heat dissipation film (121), a film in which a polypropylene (PP) film, an aluminum film, a nylon film, and a PET film are laminated and compressed may be used.

The heat dissipation film (121) is thermally compressed to the film coupling part (123a) of the heat dissipation case (123) while covering at least one flow passage groove (123b). As the heat dissipation film (121) is coupled to the heat dissipation case (123), the heat dissipation part (120) provided with the cooling flow passage (125) is manufactured (S3).

A port (129), which is a flow passage of cooling water, is installed in the heat dissipation case (123) (S4). The port (129) is inserted into an opening (not shown) for the port and fixed to the heat dissipation case (123) by an adhesive. Alternatively, the port (129) may be coupled to an opening (not shown) for the port by any one of a heterojunction method and a bolting method. Then, the gap of the port (129) with the heat dissipation case (123) is sealed by a sealing member.

The heat dissipation part (120) is coupled to at least one battery cell (110) such that the heat dissipation film (121) contacts the bottom surface of the at least one battery cell (110) (S5). In step S5, at least one battery cell (110) is preferably coupled to the heat dissipation part (120) such that a partial region of the vent part (111) of the battery cell (110) is placed on the cooling flow passage (125).

The preferred examples of the present invention as described above have been disclosed for illustrative purposes, and those skilled in the art having ordinary knowledge of the present invention will be able to make various modifications, changes, and additions within the scope of the present invention.

### Industrial Applicability

According to a battery module related to at least one example of the present invention, and a manufacturing method thereof, it is possible to early suppress a flame of an ignited battery cell by a method that while a heat dissipation film is torn by a pressure to open a vent part of the battery cell upon internal ignition of the battery cell, cooling water flows down to the battery cell through the damaged portion of the heat dissipation film.

## Claims

1. A battery module comprising:
at least one battery cell (110) having a vent part (111); and
a heat dissipation part (120), which is disposed to face the vent part (111) of the at least one battery cell (110), for dissipating heat from the battery cell (110),
the heat dissipation part (120) comprising a heat dissipation film (121), one side of which is attached to the battery cell (110) to face the vent part (111) of the battery cell (110), and a heat dissipation case (123), which is coupled to the other side opposite to one side of the heat dissipation film (121), having a cooling flow passage (125) through which cooling water flows,
the heat dissipation film (121) being provided to be damaged when the vent part (111) of the battery cell (110) is ignited,
wherein
the heat dissipation part (120) is provided so that the cooling water flowing through the cooling flow passage (125) passes through the damaged portion of the heat dissipation film (121) to flow to the vent part (111) of the battery cell (110),the heat dissipation case (123) has a film coupling part (123a) coupled to the heat dissipation film (121), and at least one flow passage groove (123b) provided stepwise with respect to the film coupling part (123a),
the heat dissipation film (121) surrounds the at least one flow passage groove (123b), and
the cooling flow passage (125) is provided in a space between the at least one flow passage groove (123b) and the heat dissipation film (121).

2. The battery module according to claim 1, wherein
the heat dissipation film (121) is a film in which a polymer resin film is compressed to an aluminum film.

3. The battery module according to claim 1, wherein
the heat dissipation film (121) comprises a polypropylene (PP) film (121a), an aluminum film (121b), a nylon film (121c), and a polyethylene terephthalate (PET) film.

4. The battery module according to claim 1, wherein
the at least one flow passage groove (123b) comprises a reference groove (123b-1), and a plurality of branch grooves (123b-2) branched from the reference groove (123b-1).

5. The battery module according to claim 1, wherein
the heat dissipation part (120) further comprises a port (129) connected to the flow passage groove (123b) to enable fluid migration and provided in the heat dissipation case (123), and a cooling unit connected to the port (129) and provided to supply or recover cooling water through the port (129).

6. The battery module according to claim 3, wherein
the heat dissipation case (123) is formed of a synthetic resin.

7. The battery module according to claim 6, wherein
the synthetic resin comprises a polypropylene (PP)-based resin.

8. A method for manufacturing the battery module (10) according to any one of claims 1 to 7, wherein the method for manufacturing the battery module (10) comprises steps of:
molding a heat dissipation case (123) having a cooling flow passage (125) by a vacuum injection method; and
thermally compressing a heat dissipation film (121) to the heat dissipation case (123).

9. The method for manufacturing the battery module (10) according to claim 8,
comprising a step of coupling a heat dissipation film (121) to the battery cell (110) such that a partial region of the vent part (111) of the battery cell (110) is located on the cooling flow passage (125).

10. The method for manufacturing the battery module (10) according to claim 8, wherein
the heat dissipation film (121) comprises a polypropylene (PP) film (121a), an aluminum film (121b), a nylon film (121c), and a polyethylene terephthalate (PET) film.

11. The method for manufacturing the battery module (10) according to claim 8, wherein
the heat dissipation case (123) comprises a polypropylene (PP)-based resin.

## Patentansprüche

1. Batteriemodul, umfassend:
wenigstens eine Batteriezelle (110), welche einen Entlüftungsteil (111) aufweist; und
einen Wärmeableitungsteil (120) welcher derart angeordnet ist, dass er dem Entlüftungsteil (111) der wenigstens einen Batteriezelle (110) zugewandt ist, um Wärme von der Batteriezelle (110) abzuleiten,
wobei der Wärmeableitungsteil (120) eine Wärmeableitungsfolie (121), bei welcher eine Seite derart an der Batteriezelle (110) angebracht ist, dass sie dem Entlüftungsteil (111) der Batteriezelle (110) zugewandt ist, und ein Wärmeableitungsgehäuse (123) umfasst, welches entgegengesetzt zu einer Seite der Wärmeableitungsfolie (121) mit der anderen Seite gekoppelt ist und welches einen Kühlströmungskanal (125) aufweist, durch welchen Kühlwasser strömt,
wobei die Wärmeableitungsfolie (121) derart bereitgestellt ist, dass sie beschädigt wird, wenn der Entlüftungsteil (111) der Batteriezelle (110) entzündet wird,
wobei
der Wärmeableitungsteil (120) derart bereitgestellt ist, dass das Kühlwasser, welches durch den Kühlströmungskanal (125) strömt, den beschädigten Abschnitt der Wärmeableitungsfolie (121) durchsetzt, um zu dem Entlüftungsteil (111) der Batteriezelle (110) zu strömen, wobei das Wärmeableitungsgehäuse (123) einen Folienkopplungsteil (123a), welcher mit der Wärmeableitungsfolie (121) gekoppelt ist, und wenigstens eine Strömungskanalnut (123b) aufweist, welches in Bezug auf den Folienkopplungsteil (123a) stufenweise bereitgestellt ist,
der Wärmeableitungsteil (120) die wenigstens einen Strömungskanalnut (123b) umgibt und
der Kühlströmungskanal (125) in einem Raum zwischen der wenigstens einen Strömungskanalnut (123b) und der Wärmeableitungsfolie (121) bereitgestellt ist.

2. Batteriemodul nach Anspruch 1, wobei
die Wärmeableitungsfolie (121) eine Folie ist, bei welcher ein Polymerharz auf eine Aluminiumfolie komprimiert ist.

3. Batteriemodul nach Anspruch 1, wobei
die Wärmeableitungsfolie (121) eine Polypropylen- (PP) -Folie (121a), eine Aluminiumfolie (121b), eine Nylonfolie (121c) und eine Polyethylenterephthalat- (PET) - Folie umfasst.

4. Batteriemodul nach Anspruch 1, wobei
die wenigstens eine Strömungskanalnut (123b) eine Referenznut (123b-1) und eine Mehrzahl von Verzweigungsnuten (123b-2) umfasst, welche von der Referenznut (123b-1) abzweigen.

5. Batteriemodul nach Anspruch 1, wobei
der Wärmeableitungsteil (120) ferner einen Anschluss (129), welcher mit der Strömungskanalnut (123b) verbunden ist, um eine Fluidmigration zu ermöglichen, und in dem Wärmeableitungsgehäuse (123) bereitgestellt ist, und eine Kühleinheit umfasst, welche mit dem Anschluss (129) verbunden ist und bereitgestellt ist, um Kühlwasser durch den Anschluss (129) zuzuführen oder zurückzugewinnen.

6. Batteriemodul nach Anspruch 3, wobei
das Wärmeableitungsgehäuse (123) aus einem synthetischen Harz gebildet ist.

7. Batteriemodul nach Anspruch 6, wobei
das synthetische Harz ein Harz auf Basis von Polypropylen (PP) umfasst.

8. Verfahren zur Herstellung des Batteriemoduls (10) nach einem der Ansprüche 1 bis 7, wobei das Verfahren zur Herstellung des Batteriemoduls (10) folgende Schritte umfasst:
Formen eines Wärmeableitungsgehäuses (123), welches einen Kühlströmungskanal (125) aufweist, durch ein Vakuuminjektionsverfahren; und
thermisch Komprimieren einer Wärmeableitungsfolie (121) auf das Wärmeableitungsgehäuse (123).

9. Verfahren zur Herstellung des Batteriemoduls (10) nach Anspruch 8,
umfassend einen Schritt eines Koppelns einer Wärmeableitungsfolie (121) mit der Batteriezelle (110), so dass ein Teilbereich des Entlüftungsteils (111) der Batteriezelle (110) an dem Kühlströmungskanal (125) angeordnet ist.

10. Verfahren zur Herstellung des Batteriemoduls (10) nach Anspruch 8, wobei
die Wärmeableitungsfolie (121) eine Polypropylen- (PP) -Folie (121a), eine Aluminiumfolie (121b), eine Nylonfolie (121c) und eine Polyethylenterephthalat- (PET) - Folie umfasst.

11. Verfahren zur Herstellung des Batteriemoduls (10) nach Anspruch 8, wobei
das Wärmeableitungsgehäuse (123) ein Harz auf Basis von Polypropylen (PP) umfasst.

## Revendications

1. Module de batterie comprenant :
au moins un élément de batterie (110) ayant une partie de ventilation (111) ; et
une partie de dissipation de chaleur (120), qui est disposée pour faire face à la partie de ventilation (111) de l'au moins un élément de batterie (110), pour dissiper la chaleur provenant de l'élément de batterie (110),
la partie de dissipation de chaleur (120) comprenant un film de dissipation de chaleur (121), dont un côté est fixé à l'élément de batterie (110) pour faire face à la partie de ventilation (111) de l'élément de batterie (110), et un boîtier de dissipation de chaleur (123), qui est accouplé à l'autre côté opposé au côté du film de dissipation de chaleur (121), ayant un passage d'écoulement de refroidissement (125) à travers lequel de l'eau de refroidissement s'écoule,
le film de dissipation de chaleur (121) étant fourni pour être endommagé lorsque la partie de ventilation (111) de l'élément de batterie (110) est enflammée,
dans lequel
la partie de dissipation de chaleur (120) est fournie de façon à ce que l'eau de refroidissement s'écoulant à travers le passage d'écoulement de refroidissement (125) passe à travers la portion endommagée du film de dissipation de chaleur (121) pour s'écouler vers la partie de ventilation (111) de l'élément de batterie (110), le boîtier de dissipation de chaleur (123) a une partie d'accouplement de film (123a) accouplée au film de dissipation de chaleur (121), et au moins une rainure de passage d'écoulement (123b) fournie échelonnée par rapport à la partie d'accouplement de film (123a),
le film de dissipation de chaleur (121) entoure l'au moins une rainure de passage d'écoulement (123b), et
le passage d'écoulement de refroidissement (125) est fourni dans un espace entre l'au moins une rainure de passage d'écoulement (123b) et le film de dissipation de chaleur (121).

2. Module de batterie selon la revendication 1, dans lequel
le film de dissipation de chaleur (121) est un film dans lequel un film de résine polymère est comprimé sur un film d'aluminium.

3. Module de batterie selon la revendication 1, dans lequel
le film de dissipation de chaleur (121) comprend un film de polypropylène (PP) (121a), un film d'aluminium (121b), un film de nylon (121c), et un film de polyéthylène téréphtalate (PET).

4. Module de batterie selon la revendication 1, dans lequel
l'au moins une rainure de passage d'écoulement (123b) comprend une rainure de référence (123b-1), et une pluralité de rainures de ramification (123b-2) se ramifiant à partir de la rainure de référence (123b-1).

5. Module de batterie selon la revendication 1, dans lequel
la partie de dissipation de chaleur (120) comprend en outre un orifice (129) relié à la rainure de passage d'écoulement (123b) pour permettre une migration de fluide et fourni dans le boîtier de dissipation de chaleur (123), et une unité de refroidissement reliée à l'orifice (129) et fournie pour délivrer ou récupérer de l'eau de refroidissement à travers l'orifice (129).

6. Module de batterie selon la revendication 3, dans lequel
le boîtier de dissipation de chaleur (123) est constitué d'une résine synthétique.

7. Module de batterie selon la revendication 6, dans lequel
la résine synthétique comprend une résine à base de polypropylène (PP).

8. Procédé pour fabriquer le module de batterie (10) selon l'une quelconque des revendications 1 à 7, dans lequel le procédé pour fabriquer le module de batterie (10) comprend des étapes consistant à :
mouler un boîtier de dissipation de chaleur (123) ayant un passage d'écoulement de refroidissement (125) par un procédé d'injection sous vide ; et
comprimer thermiquement un film de dissipation de chaleur (121) sur le boîtier de dissipation de chaleur (123).

9. Procédé pour fabriquer le module de batterie (10) selon la revendication 8,
comprenant une étape consistant à accoupler un film de dissipation de chaleur (121) à l'élément de batterie (110) de telle sorte qu'une région partielle de la partie de ventilation (111) de l'élément de batterie (110) soit située sur le passage d'écoulement de refroidissement (125).

10. Procédé pour fabriquer le module de batterie (10) selon la revendication 8, dans lequel
le film de dissipation de chaleur (121) comprend un film de polypropylène (PP) (121a), un film d'aluminium (121b), un film de nylon (121c), et un film de polyéthylène téréphtalate (PET).

11. Procédé pour fabriquer le module de batterie (10) selon la revendication 8, dans lequel
le boîtier de dissipation de chaleur (123) comprend une résine à base de polypropylène (PP).
